Europäisches Patentamt

European Patent Office

Office européen des brevets

(11) Publication number: **0 225 573**
**A2**

## (12) EUROPEAN PATENT APPLICATION

(21) Application number: **86116635.3**

(22) Date of filing: **29.11.86**

(51) Int. Cl.⁴: **B 21 D 25/02,** B 21 D 26/02

(30) Priority: **02.12.85 US 792675**

(43) Date of publication of application: **16.06.87**
**Bulletin 87/25**

(84) Designated Contracting States: **DE FR GB IT NL SE**

(71) Applicant: **ALUMINIUM COMPANY OF AMERICA, Alcoa Building, Pittsburgh Pennsylvania (US)**

(72) Inventor: **Holt, Ronald A., 169 West Pittsburgh Street, Delmont (US)**
Inventor: **Mascarello, Louis, 693 Pine Run Road, Appolo Pennsylvania (US)**

(74) Representative: **Baillie, Iain Cameron et al, c/o Ladas & Parry Isartorplatz 5, D-8000 München 2 (DE)**

(54) **End sealing apparatus for hollow members.**

(57) A sealing apparatus for sealing the open ends of a generally irregular hollow workpiece (12) to provide for application and retention of fluid or gas pressure therein during workpiece forming operations comprises an end plug assembly (30) constructed of a pair of rigid body members (58, 60), a seal member (62) intermediate said members (58, 60) and clamp means (70, 72, 74, 76) to engage said seal member (62) with the interior of workpiece (12), a flow path (86) being provided to pressurize the interior of workpiece (12).

## END SEALING APPARATUS FOR HOLLOW MEMBERS

In the metal forming arts there are known a variety of forming techniques in which a workpiece, usually an elongated hollow extrusion or sheet form member, is formed to the surface profile of a forming die. The hollow shape is formed to the profile or contour of the die by the application of forces sufficient to exceed the material's yield strength. This force can be a simple bending action or the combination of bending and superimposed tension. Such forming processes typically have been applied in the forming of aluminum alloy components such as hollow extrusions or thin section panels like those used for aircraft fuselage skin.

Such forming processes have utilized internal supports within the hollow interior of generally irregular cross-section tubular workpieces to support the workpiece cross-section during lateral forming and thereby maintain a uniform workpiece cross-section. For example, internal workpiece supports of one form or another have been contemplated for all of the following forming processes: conventional bending, stretch bending, radial draw forming, and compressive bending.

Conventional internal supports have included inter alia, pressurized fluid contained within the hollow interior of the workpiece. By using fluid or gas pressure support typically is maintained by relatively low pressure levels, on the order of 15 to 30 psi for example, and in any event far lower than the magnitude of pressure which would be required to perform any mechanical work on the workpiece. Nevertheless, such moderate internal pressure is sufficient to maintain the workpiece section shape during the forming operation. The internal pressure support is especially beneficial when working with thin-walled members whose outer wall might otherwise collapse inwardly during forming.

The pressure medium of choice is air or other suitably compressible gaseous medium although liquid may also be used. The term fluid as used herein refers either

-2-

to a gaseous or a liquid medium. The use of air provides fast and efficient development of internal workpiece support pressure and convenience of pressure fluid disposal after the forming operation is completed. At the low pressure levels specified, it is also quite safe. Furthermore, the advantages of light weight and utilization of existing resources (most plants have pressurized air capability in place) are realized. The advantages over solid internal supports (e.g. ball bearings or articulated mandrels) thus are considerable.

When utilizing internal fluid pressure support in an elongated hollow workpiece such as an aluminum extrusion, it is necessary to seal the open ends of the workpiece to contain the fluid pressure. A fluid pressure inlet and outlet must also be provided to permit pressurization and depressurization of the sealed interior space. In one known means of sealing the open ends of a hollow workpiece, a plug with a cross-sectional shape conforming to the interior section of the workpiece is comprised of an elongated rigid body member. The plug may be received into an open end of the workpiece, and one or more O-rings reside in suitable encompassing grooves formed in the rigid plug body to provide pressure sealing engagement with the interior periphery of the workpiece. Passages are formed in the plug to provide a flow path between the interior and the exterior of the workpiece for inlet and/or exhaust of the pressure medium. Of course, a suitable source of fluid flow is connected to the inlet to provide the requisite pressure.

One known use of such a plug closure is in a stretch forming operation wherein the plug is carried by the gripping jaw assembly that is used to grip an end of the workpiece for stretch forming thereof. These prior plugs have been generally suitable for the intended purposes but have nevertheless been subject to certain shortcomings. For example, the rigid plug plus encompassing O-ring is generally suitable only for simple cross-sections, and in particular only those cross-sections having no concave portions. Furthermore, insertion of the plug into an open ended member is more difficult than would be desirable due to the immediate and continuous sealing engagement of the O-rings with the workpiece interior periphery.

Additional prior art on end plugs generally for use in the forming of hollow members includes the following: U.S. Patent Nos. 203,842, 567,518, 2,389,038, 3,105,537, 3,328,996, 3,473,361, 3,922,134, and 4,156,588. Other prior art of general relevance to the bending of tubular and similar elements include U.S. Patents 506,157, 1,534,314, 1,555,895, 2,044,322, 2,057,359, 3,016,081, 3,251,126, 3,841,138, and 4,135,380. Most of the patents in this latter group disclose solid interior supports such as articulated mandrels.

The present invention concerns a novel and improved pressure medium supply and containment apparatus for use in sealing the open ends of a hollow, workpiece and for providing an inlet/outlet for pressure flow. . The invention is especially adapted for use in stretch wrap forming operations, although it may be used in conjunction with other forming processes as well.

The novel structure includes but is not limited to a plug assembly having a resiliently deformable elastomeric seal member sandwiched between a pair of rigid body members which may be drawn together to clamp and compressively deform the elastomeric member therebetween whereby the elastomeric member is deformed to engage the interior periphery of the workpiece and to thereby provide a pressure seal. Since the interior section of an extrusion may take any of a variety of irregular forms, the components of the plug are formed to generally correspond with a selected interior section. The compressive deformation imposed on the elastomeric seal member forces the exterior periphery of the seal member into continuous peripheral sealing engagement with the interior of the workpiece thus providing a reliable pressure seal in even the most complex of interior sections. The convenient

-4-

establishment of a reliable pressure seal in complex workpiece cross-sections has been a continuing problem in the prior art as above noted.

In one preferred embodiment of the invention, pressure is supplied through the plug assembly, and in another through the workpiece sidewall. The invention thus advantageously provides for improved ease and efficiency in sealing and internally pressurizing a hollow member such as a extrusion for mechanical working thereof.

According to the present invention there is provided a sealing apparatus for sealing an open end of a generally elongated hollow workpiece (12) in a manner to maintain pressure fluid therein, comprising:

an end plug assembly (30) for insertion into an open end of such a workpiece (12);

characterized by:

said end plug assembly (30) comprising a pair of rigid body members (58, 60) and intervening, resiliently deformable seal member (62);

said body members (58, 60) having mutually confronting surface portions (64, 66) and continuous peripheral portions conforming generally to the interior peripheral profile of such a workpiece (12);

said seal member (62) being disposed intermediate said confronting surface portions (64, 66) and having a continuous peripheral portion (68) conforming generally to the interior peripheral profile of such a workpiece (12);

clamp means (70, 72, 74, 76) which cooperates with said rigid body members (58, 60) and is selectively operable after insertion of said end plug assembly (30) into an open end of such a workpiece (12) to compressively deform said sealing member (62) between said confronting surfaces (64, 66) in a manner to deform said seal member (62) such that said continuous peripheral portion (68) thereof engages the interior peripheral profile of such a workpiece (12) to provide continuous peripheral pressure fluid sealing engagement therewith; and

pressure fluid passage means (80, 82, 84) cooperable with said end plug assembly (30) to provide a flow path (86) for pressure fluid between the sealed interior and the exterior of such a workpiece (12).

-5-

In the accompanying drawings:

Fig. 1 is a generally schematic illustration of a stretch-forming apparatus of the prior art;

Fig. 2 is a more detailed, generally schematic illustration of the apparatus of Fig. 1 showing the workpiece clamp jaws and end plugs of the present invention for containing fluid pressure within the workpiece during forming;

Fig. 3 is a partially sectioned side elevation of an end plug according to one embodiment of the present invention;

Fig. 4 is an end elevation taken on line 4-4 of Fig. 3; and

Fig. 5 is a partially sectioned side elevation of an alternative plug structure.

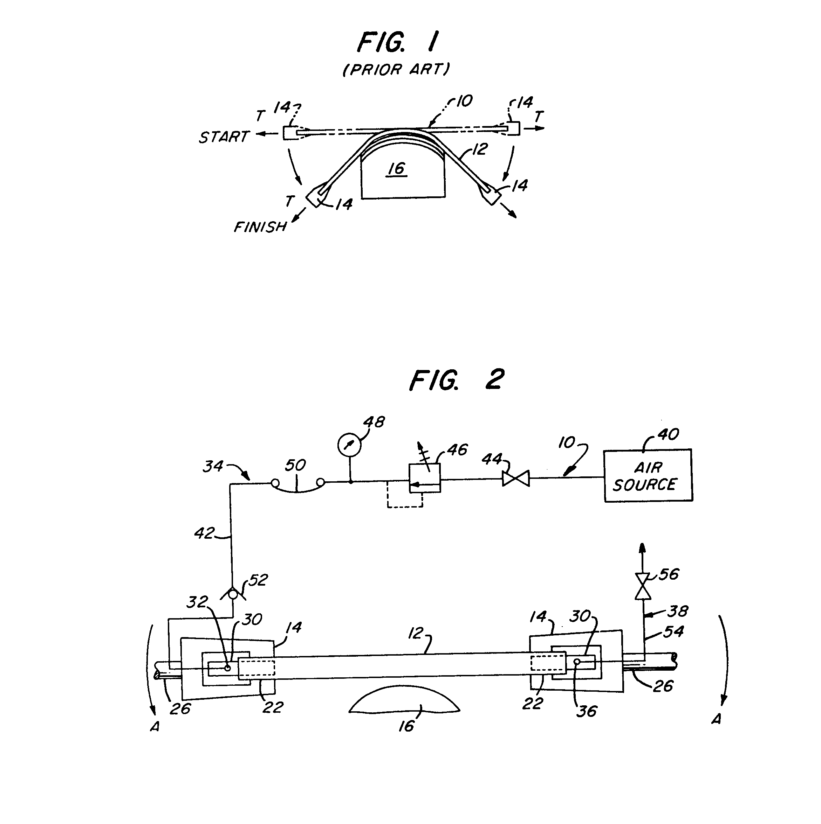

There is generally indicated at 10 in Fig. 1 a fragmentary portion of a conventional prior art stretch forming apparatus which is utilized to form an elongated workpiece 12 to a desired shape. Apparatus 10, shown in schematic form for purposes of simplification and clarity, comprises a pair of spaced apart grippers 14 which are initially aligned in a position designated by phantom lines and labeled "start." The grippers 14 secure the opposite ends of workpiece 12 and suitable known tension means such as hydraulic piston and cylinder assemblies (not shown) apply to the workpiece a tension T of sufficient magnitude to exceed the elastic limits of the workpiece. While tension T is maintained, the grippers 14 are moved in suitable, known adjustable mountings (not shown) to the position designated "finish" to form the workpiece 12 over a forming die 16. Throughout the forming process the tension T is maintained in alignment with a chord extending longitudinally of the workpiece 12.

Fig. 2 illustrates in a more detailed schematic the stretch wrap forming apparatus 10 comprised of a pair of adjustably mounted gripper assemblies 14 having jaws 22 which are adapted to selectively grip the respective opposite ends of the elongated, hollow workpiece 12. Gripper assemblies 14 are mounted on suitably adjustable and well known carriers, shown partially at 26 as the outer ends of piston rod portions of hydraulic cylinder assemblies (not shown). The cylinder assemblies carry grippers 14, and in turn are carried by well known adjustable mountings (not shown) to permit movement thereof with respect to a forming die 16 as above described.

The piston rods 26 cooperate with cylinders (not shown) to impose a tension load of a selected magnitude upon workpiece 12 while rotary movement of the grippers 14 and their supports as indicated by arrows A forms the workpiece 12 over the forming die 16.

Each gripper assembly 14 incorporates a plug member 30 of the present invention which is of a cross-sectional form and size to be sealingly inter-engaged within the respective open end of workpiece 12. A gas inlet port 32, such as in one plug 30, cooperates with a gas pressure supply system 34 to provide for internal pressurization of the workpiece 12 and an exhaust port, for example in the other plug 30, cooperates with a gas bleed line 38 to exhaust pressurized gas from workpiece 12.

Both the gas supply system 34 and exhaust system 38 may be of entirely conventional construction. For example, gas supply system 34 comprises a source 40 such as a compressor which is connected via a conduit 42 with inlet port 32. Interposed serially in the flow path defined by conduit 42 are such requisite andconventional flow directing and control elements as a stop valve 44, an adjustable self-clamping flow control valve 46, a pressure gage 48, a moisture trap 50 and a one-way (non-backflow) check valve 52. Exhaust line 38 may be comprised of a conduit 54 having interposed therein a manually operable pressure bleed valve 56.

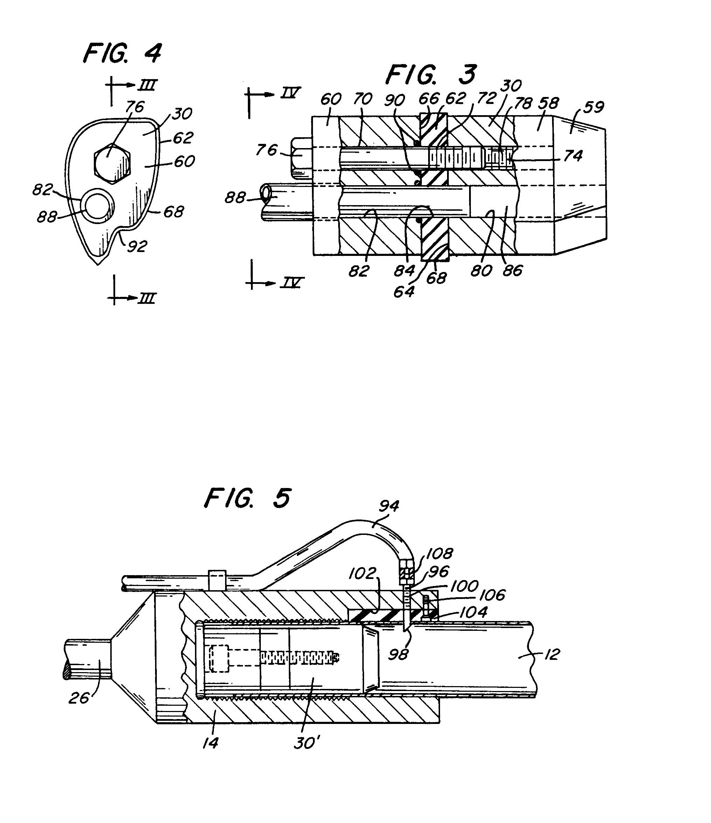

In Figs. 3 and 4, one of plugs 30 is shown as comprising a pair of elongated, substantially identical cross-section rigid body members including an inner body member 58 and an outer body member 60. The members 58 and 60 are of machined steel, for example, and are of a cross-sectional form to conform closely with the interior cross-section of the workpiece 12 while also being readily interfitted therein. The inner end portion 59 of member 58 is tapered to permit easy initial fitup of plug 30 within an open end of the workpiece 12.

A resiliently deformable elastomeric seal member 62 of rubber or the like with a durometer hardness preferably in the range of 80 to 90 is sandwiched between confronting surfaces 64, 66 of body members 58, 60 respectively. The cross-section of seal 62 preferably is slightly larger than the cross-section of members 58 and 60 such that a continuous peripheral portion 68 of seal 62 protrudes outwardly of members 58 and 60. Preferably, upon insertion of plug 30 into the open end of workpiece 12, the periphery 68 of seal 30 will lightly engage interior peripheral portions of the workpiece 12. This provides guidance for plug 30 as it is inserted into or removed from the open end of workpiece 12, provides for proper alignment of the plug 30, and especially of the seal 62, and thus enhances the sealing capability of the invention. The slightly enlarged cross-section of seal member 62 also provides a small continuous peripheral clearance between the members 58 and 60 and the interior periphery of the workpiece.

A longitudinal through bore 70 extends within member 60 in axial alignment with a bore 72 of substantially equal radius formed in seal member 62, and also in axial alignment with a threaded blind bore 74 formed in member 58. A clamping bolt 76 is inserted through bores 70 and 72 and is engaged with thread 78 within bore 74 to permit members 58 and 60 to be drawn together to compressively deform seal 62 between surfaces 64 and 66.

The members 58, 60 and 62 also are provided with another set of 3 axially aligned through bores 80, 82 and 84, respectively, which serve as a pressure fluid flow path 86 between the interior and the exterior of workpiece 12 when plug 30 is installed therein. Although the flow path 86 may function as either a fluid inlet or a fluid outlet, as shown in Fig. 3 and 4 a fluid inlet conduit 88 extends into and through bores 82 and 84, and includes a connector end portion which is engaged in

0225573

-8-

sealed relationship within bore 80 to provide for pressure fluid flow into workpiece 12 via the flow path 86.

To provide a suitable pressure seal about the periphery of bolt 76 and conduit 88, O-rings or other suitable seals 90 may encompass the bolt 76 and conduit 88 within member 60 to supplement the pressure seal provided by deformation of member 62 as described below.

In practice, end plug 30, assembled as above described, is inserted tapered end first into one end of workpiece 12 and bolt 76 is tightened down to compress seal 62 between members 58 and 60. As seal 62 is compressively deformed, periferal portions 68 thereof bulge outwardly, and longitudinally into the clerance between members 58, 60 and the inner periphery of the workpiece, to engage the inner periphery of the workpiece 12 along a continuous peripheral line of sealing engagement. The uniformity of the compressive deformation causes seal 62 to bulge outwardly at every location along its entire periphery 68, including zones of pronounced concavity as at 92 in Fig. 4.

The end plug 30 is utilized, for example, in conjunction with the gripper jaws 14 of a stretch forming appartus as shown in Figs. 2 and 5. Fig. 5 also illustrates an alternative embodiment of the invention wherein a plug 30' is received within one end of a workpiece 12 to maintain fluid pressure therein and gripper jaws 14 clamp onto the exterior end periphery of workpiece 12 to impart axial tension and lateral bending or forming effort thereto as above described. Plug 30' is similar in all salient respects to the above described plug 30, except that it provides no flow path for entry or exhaust pressure fluid. Instead, air pressure is provided via a conduit such as a flexible hose 94 which is connected to a selectively operable piercing tap 96 carried adjacent a forward end of gripper jaws 14. A forward piercing end 98 of tap 96 is effective to pierce the peripheral sidewall of the workpiece 12 upon threading the tap 96 through a threaded bore 100 in gripper jaw 14. An undercut portion 102 of jaw 14 coincides with the location of threaded bore 100 and receives a resiliently flexible rubber sealing pad 104 which is secured in position as by a screw 106, for example, and is maintained in deformed surface sealing engagement with workpiece 12 when jaws 14 are closed. The forward end 98 of tap 96 thus passes through seal pad 104 and, upon screwing down the tap 96, end 98 thereof penetrates the peripheral wall of workpiece 12 at a point spaced inwardly from the plug 30. A through passage 108 in tap 96 thus communicates between conduit 94 and the interior of workpiece 12 to provide a pressure fluid inlet or outlet, and seal pad 104 provides an effective pressure seal about the opening pierced in the workpiece sidewall to prevent escape of pressure fluid therefrom.

According to the description hereinabove, the present invention provides a novel and improved workpiece sealing structure for closing the open ends of a symetrical or non-symetrical hollow, generally tubular member to permit pressure fluid support to be maintained therein during forming of the workpiece. Although the invention has been described in terms of particular presently preferred embodiments thereof, it is to be appreciated that the inventors have considered various alternative and modified embodiments also. Accordingly, it is intended that the invention be construed as broadly as permitted by the scope of the claims appended hereto.

0225573

-1-

## C L A I M S

1.     A sealing apparatus for sealing an open end of a generally elongated hollow workpiece (12) in a manner to maintain pressure fluid therein, comprising:
an end plug assembly (30) for insertion into an open end of such a workpiece (12);
characterized by:
said end plug assembly (30) comprising a pair of rigid body members (58, 60) and intervening, resiliently deformable seal member (62);
said body members (58, 60) having mutually confronting surface portions (64, 66) and continuous peripheral portions conforming generally to the interior peripheral profile of such a workpiece (12);
said seal member (62) being disposed intermediate said confronting surface portions (64, 66) and having a continuous peripheral portion (68) conforming generally to the interior peripheral profile of such a workpiece (12);
clamp means (70, 72, 74, 76) which cooperates with said rigid body members (58, 60) and is selectively operable after insertion of said end plug assembly (30) into an open end of such a workpiece (12) to compressively deform said sealing member (62) between said confronting surfaces (64, 66) in a manner to deform said seal member (62) such that said continuous peripheral portion (68) thereof engages the interior peripheral profile of such a workpiece (12) to provide continuous peripheral pressure fluid sealing engagement therewith; and
pressure fluid passage means (80, 82, 84) cooperable with said end plug assembly (30) to provide a flow path (86) for pressure fluid between the sealed interior and the exterior of such a workpiece (12).

2.     The apparatus as claimed in claim 1, characterized in that said continuous peripheral portion (68) of said seal member (62) projects outwardly of the respective said

U.S. 792,675 HOLT

continuous peripheral portions of said rigid body members (58, 60).

3.      The apparatus as claimed in claim 1 or 2, characterized in that said continuous peripheral portions of said rigid body members (58, 60) provide a continuous peripheral clearance between said rigid body members (58, 60) and the interior peripheral profile of such a workpiece.

4.      The apparatus as claimed in any of claims 1 to 3, characterized in that said clamp means comprises a clamping bolt (76) which passes through aligned through bores (70, 72) formed in one of said rigid body members (58, 60) and said seal member (62) and is threadably engageable in an aligned threaded bore (74) formed in the other of said rigid body members (58, 60).

5.      The apparatus as claimed in any of the preceding claims, characterized in that said pressure fluid passage means comprises respective aligned through bores (80, 82, 84) in said rigid body members (58, 60) and in said seal member (62) to provide for pressure fluid flow into and out of the sealed interior of such a workpiece (12).

6.      The apparatus as claimed in claim 5, characterized in that said pressure fluid passage means is adapted to receive therein a pressure fluid supply conduit connector means (88).

7.      The apparatus as claimed in any of claims 1 to 3, characterized in that said pressure fluid passage means comprises selectively operable piercing tap means (96) having a through bore (108) which opens adjacent the piercing end (98) of said tap means (96), said tap means (96) being carried adjacent one said end plug assembly (30') installed in a respective open end of such a workpiece (12) and selectively operable to penetrate the exterior periphery of such a workpiece (12) inwardly of said one end plug assembly (30') whereby said through bore (108) provides for pressure fluid flow into and out of the sealed interior of such a workpiece (12).

8.      The apparatus as claimed in claim 7, characterized in that a sealing pad (104) is positioned adjacent the location where said piercing tap means (96) penetrates the exterior periphery of such a workpiece (12) to provide pressure fluid sealed engagement of said piercing tap means (96) with the exterior periphery of such workpiece.

9.    The apparatus as claimed in claim 8, characterized by including gripper jaw means (14) adapted to engage exterior peripheral portions of such an open end of a workpiece (12), said piercing tap means (96) and said sealing pad (104) being carried by said gripper jaw means (14) for sealed penetration of the exterior periphery of such a workpiece (12) when said gripper jaw means (14) engages such exterior peripheral portions of such an open end.

## FIG. 1
### (PRIOR ART)

## FIG. 2

FIG. 4

FIG. 3

FIG. 5